(19) Europäisches Patentamt

European Patent Office

Office européen des brevets

(11) **EP 4 725 908 A1**

(12) **EUROPEAN PATENT APPLICATION**

(43) Date of publication:
**15.04.2026 Bulletin 2026/16**

(21) Application number: **25206190.8**

(22) Date of filing: **01.10.2025**

(51) International Patent Classification (IPC):
**C01G 45/1228** (2025.01)    **H01M 4/505** (2010.01)

(52) Cooperative Patent Classification (CPC):
**C01G 45/1228; H01M 4/485; H01M 4/505;
H01M 4/525; H01M 10/0525;** H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **11.10.2024 KR 20240138905**

(71) Applicants:
• **SAMSUNG SDI CO., LTD.
Yongin-si, Gyeonggi-do 17084 (KR)**
• **Seoul National University R&DB Foundation
Seoul 08826 (KR)**

(72) Inventors:
• **SEONG, Wonmo
17084 Yongin-si (KR)**
• **KANG, Kisuk
17084 Yongin-si (KR)**
• **PARK, Jonghun
17084 Yongin-si (KR)**
• **KANG, Byungwook
17084 Yongin-si (KR)**

(74) Representative: **Marks & Clerk LLP
15 Fetter Lane
London EC4A 1BW (GB)**

(54) **POSITIVE ELECTRODE ACTIVE MATERIALS, PREPARATION METHODS THEREOF, POSITIVE ELECTRODES, AND RECHARGEABLE BATTERIES**

(57)    A positive electrode active material, a method for preparing the positive electrode active material, a positive electrode including the positive electrode active material, and a rechargeable battery (e.g., a rechargeable lithium battery) including the positive electrode are disclosed. The positive electrode active material may have a disordered rocksalt structure. The positive electrode active material includes a compound represented by Chemical Formula 1, wherein a ratio of $M^1$ having an oxidation number of +2 is less than or equal to about 25 at%, based on a total of 100 at% of $M^1$.

FIG. 6

**Description**

**BACKGROUND**

**1. Field**

One or more embodiments of the present disclosure relate to a positive electrode active material, a method for preparing the positive electrode active material, a positive electrode including the positive electrode active material, and a rechargeable battery (e.g., a rechargeable lithium battery) including the positive electrode.

**2. Description of the Related Art**

Portable information devices, such as a cell phone, a laptop, a smart phone, and/or the like, and/or electric vehicles have utilized a rechargeable lithium battery having high energy density and easy portability as a driving power source. Research has been conducted to utilize rechargeable lithium batteries having high energy density as a driving power source for hybrid or electric vehicles as well as a power storage source for energy storage systems.

In order to implement rechargeable lithium batteries suitable for these purposes, one or more suitable positive electrode active materials are being reviewed. Among them, lithium nickel-based oxide, lithium nickel manganese cobalt composite oxide, lithium nickel cobalt aluminium composite oxide, and lithium cobalt oxide are mainly or predominantly utilized as positive electrode active materials.

However, as the demand or desire for large size, high capacity (e.g., high initial charge/discharge capacity), high energy density, or improved or enhanced productivity for rechargeable lithium batteries has increased, it is desirable to develop a method of preparing new positive electrode active materials.

**SUMMARY**

One or more aspects of embodiments of the present disclosure are directed toward a positive electrode active material having a disordered rocksalt structure and capable of improving or enhancing the movement speed of lithium ions to realize excellent or suitable capacity characteristics and cycle-life characteristics (e.g., high initial charge/discharge capacity), and a positive electrode and a rechargeable battery (e.g., a rechargeable lithium battery) including the positive electrode active material.

One or more aspects of embodiments of the present disclosure are directed toward a method for preparing the positive electrode active material.

Additional aspects of embodiments will be set forth in part in the description which follows and, in part, will be apparent from the description or may be learned by practice of the presented embodiments of the disclosure.

In one or more embodiments, a positive electrode active material includes a compound represented by Chemical Formula 1, wherein a ratio of $M^1$ having an oxidation number of +2 based on a total of 100 atomic percentage (at%) of $M^1$ is less than or equal to about 25 at%.

$$\text{Chemical Formula 1} \qquad A_x M^1_{2-x-y} M^2_y O_{2-a} X_a$$

In Chemical Formula 1, A is one or more elements selected from lithium (Li) and sodium (Na), $M^1$ is one or more elements selected from among manganese (Mn), iron (Fe), cobalt (Co), nickel (Ni), chromium (Cr), and vanadium (V), $M^2$ is one or more elements selected from among titanium (Ti), zirconium (Zr), niobium (Nb), molybdenum (Mo), tantalum (Ta), and tungsten (W), X is a halogen element, $x/(2-x) > 1.1$, $0 < y < 1$, and $0 \leq a \leq 0.5$.

In one or more embodiments, a positive electrode active material includes a lithium manganese-based composite oxide, wherein a ratio of manganese having an oxidation number of +2 in total manganese (e.g., based on a total of 100 at% of manganese) is less than or equal to about 25 at%.

In one or more embodiments, a method for preparing a positive electrode active material includes: obtaining a mixture of an A-containing carbonate, an $M^1$-containing oxide, and an $M^2$-containing oxide in an alcoholic solvent, heat-treating the mixture at a temperature in the range of about 900 °C to about 1500 °C under an inert gas atmosphere, wherein the A is one or more elements selected from Li and Na, $M^1$ is one or more elements selected from among Mn, Fe, Co, Ni, Cr, and V, $M^2$ is one or more elements selected from among Ti, Zr, Nb, Mo, Ta, and W, and the $M^1$-containing oxide includes $M^1_2O_3$ and $M^1O_2$.

In one or more embodiments, a positive electrode includes: a positive electrode current collector; and a positive electrode active material layer disposed or provided on the positive electrode current collector and including the positive electrode active material as described in one or more embodiments.

In one or more embodiments, a rechargeable battery (e.g., a rechargeable lithium battery) includes the positive electrode as described in one or more embodiments; a negative electrode; and an electrolyte.

At least some of the above and other features of the invention are set out in the claims.

One or more embodiments of the present disclosure provide a positive electrode active material having a disordered rocksalt structure and capable of improving or enhancing the movement speed of lithium ions to implement excellent or suitable capacity characteristics (e.g., high initial charge/discharge capacity) and cycle-life characteristics, and a positive electrode and a rechargeable battery (e.g., a rechargeable lithium battery) including the positive electrode active material.

**BRIEF DESCRIPTION OF THE DRAWINGS**

The accompanying drawings, together with the specification, illustrate embodiments of the subject matter of the present disclosure, and, together with the description, serve to explain principles of embodiments of the subject matter of the present disclosure.

FIGS. 1-4 each is a schematic view illustrating a rechargeable lithium battery according to one or more embodiments.

FIG. 5 is the x-ray photoelectron spectroscopy (XPS) measurement results for the positive electrode active material prepared in Comparative Example 1.

FIG. 6 is the XPS measurement results for the positive electrode active material prepared in Example 1.

FIG. 7 is the XPS measurement results for the positive electrode active material prepared in Example 2.

FIG. 8 is the X-ray diffraction (XRD) measurement results for the positive electrode active materials prepared in Example 1 and Comparative Example 1.

FIG. 9 is a result of measuring the difference between the maximum and minimum values of the volume values of the octahedron formed by lithium and the nearest oxygen in the crystal structure for $LiCoO_2$ as a Reference Example and the positive electrode active materials prepared in Examples 3 and 4.

FIG. 10 is the results of measuring the activation barrier for the positive electrode active materials prepared in Examples 3 and 4 evaluated in FIG. 9.

FIG. 11 is the results of measuring the difference between the maximum and minimum values of the volume of the octahedron formed by lithium and the nearest oxygen within the crystal structure for the positive electrode active materials prepared in Example 3 and Example 5.

FIG. 12 is the results of measuring the change in discharge capacity according to cycles for the rechargeable lithium battery cells manufactured in Example 1, Example 2, and Comparative Example 1.

**DETAILED DESCRIPTION**

The subject matter of the present disclosure will be described more fully hereinafter with reference to the accompanying drawings, in which embodiments of the present disclosure are shown. As those skilled in the art would realize, the described embodiments may be modified in one or more suitable different ways, all without departing from the scope of the present disclosure. The drawings and description are to be regarded as illustrative in nature and not restrictive. Like reference numerals designate like elements throughout the attached drawings and the written description, and duplicative descriptions thereof may not be provided in the specification.

The utilization of "may" if (e.g., when) describing embodiments of the present disclosure refers to "one or more embodiments of the present disclosure."

In the context of the present application and unless otherwise defined, the terms "use," "using," and "used" may be considered synonymous with the terms "utilize," "utilizing," and "utilized," respectively.

As used herein, the singular forms "a," "an," and "the" are intended to include the plural forms as well, unless the context clearly indicates otherwise. The singular expression includes the plural expression unless the context clearly dictates otherwise.

As used herein, if (e.g., when) a specific definition is not otherwise provided, it will be understood that if (e.g., when) an element, such as a layer, a film, a region, or a substrate, is referred to as being "on" another element, it may be directly on the other element or intervening elements may also be present therebetween. In contrast, if (e.g., when) an element is referred to as being "directly on" another element, there are no intervening elements present therebetween.

As used herein, if (e.g., when) a specific definition is not otherwise provided, the singular may also include the plural.

Unless otherwise specified, "A or B" may refer to "including A," "including B," or "including A and B."

As used herein, "combination thereof" may refer to a mixture, a stack, a composite, a copolymer, an alloy, a blend, a reaction product, and/or the like of constituents.

Throughout the present disclosure, the expressions, such as "at least one of," "one of," and "selected from," if (e.g., when) preceding a list of elements, modify the entire list of elements and do not modify the individual elements of the list. For example, "at least one of a, b, or c," "at least one selected from among a, b, and c," "at least one selected from among a to c," and/or the like indicates only a, only b, only c, both (e.g., simultaneously) a and b, both (e.g., simultaneously) a and c, both (e.g., simultaneously) b and c, all of a, b, and c, or variations thereof.

As utilized herein, the terms "substantially," "about," or similar terms are used as terms of approximation and not as terms of degree and are intended to account for the inherent deviations in measured or calculated values that would be recognized by those of ordinary skill in the art. "About" as used herein is inclusive of the stated value and refers to as being within an acceptable range of deviation for the particular value as determined by one of ordinary skill in the art, considering the measurement in question and the error associated with measurement of the particular quantity (e.g., the limitations of the measurement system). For example, "about" may refer to as being within one or more standard deviations or within $\pm 30\%$, $\pm 20\%$, $\pm 10\%$, or $\pm 5\%$ of the stated value. Also, it should be understood that, even if (e.g., when) the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in the present disclosure is intended to include all higher numerical limitations subsumed therein.

As used herein, if (e.g., when) a definition is not otherwise provided, a particle diameter may be an average particle diameter. This average particle diameter refers to an average particle diameter ($D_{50}$), which is a diameter of particles with a cumulative volume of 50 volume% in the particle size distribution. The average particle diameter ($D_{50}$) may be measured by any suitable methods that are generally available to or generally used by those skilled in the art, for example, by measuring with a particle size analyzer and/or a transmission electron microscope (TEM) and/or a scanning electron microscope (SEM). Also, a dynamic light-scattering (DLS) measurement device may be used to perform a data analysis, and the number of particles is counted for each particle size range. From this data, the average particle diameter ($D_{50}$) value may be easily obtained through a calculation. A laser diffraction method may also be used. If (e.g., when) measuring by laser diffraction, for example, the particles to be measured are dispersed in a dispersion medium and then introduced into a commercially available laser diffraction particle size measuring device (e.g., MT 3000 available from Microtrac, Ltd.) using ultrasonic waves at about 28 kHz, and after irradiation with an output of 60 W, the average particle diameter ($D_{50}$) based on 50% of the particle size distribution in the measuring device can be calculated. As used herein, if (e.g., when) a definition is not otherwise provided, the average particle diameter ($D_{50}$) refers to a diameter of particles having a cumulative volume of 50 volume% in the particle size distribution that is obtained by measuring the size (e.g., diameter or major axis length) of about 20 particles at random in a scanning electron microscope (SEM) image. In one or more embodiments, if (e.g., when) particles are spherical (e.g., substantially spherical), "diameter" or "size" refers to a particle diameter, and if (e.g., when) the particles are non-spherical (e.g., substantially non-spherical), the "diameter" or "size" refers to a major axis length.

Herein, it should be understood that the terms, such as "has," "includes," "having," or "including," are intended to designate the presence of an embodied feature, number, step, element, or a combination thereof, but it does not preclude the possibility of the presence or addition of one or more other features, number, step, element, or a combination thereof. For example, it should be understood the terms "comprise(s)/comprising," "include(s)/including," or "have/has/having" specify the presence of stated features, integers, steps, operations, elements, and/or components, but do not preclude the presence or addition of one or more other features, integers, steps, operations, elements, components, and/or groups thereof. Also, the terms "comprise(s)/comprising," "include(s)/including," "have/has/having," or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

"Metal" is interpreted as a concept including ordinary metals, transition metals, and metalloids (semi-metals).

**Positive Electrode Active Material**

In one or more embodiments, a positive electrode active material includes a compound represented by Chemical Formula 1, wherein a ratio of $M^1$ having an oxidation number of +2 based on a total of 100 at% of $M^1$ is less than or equal to about 25 at%.

Chemical Formula 1            $A_xM^1_{2-x-y}M^2_yO_{2-a}X_a$

In Chemical Formula 1, A is one or more elements selected from Li and Na, $M^1$ is one or more elements selected from among Mn, Fe, Co, Ni, Cr, and V, $M^2$ is one or more elements selected from among Ti, Zr, Nb, Mo, Ta, and W, X may be a halogen element, x/(2-x)>1.1, 0<y<1, and 0≤a≤0.5.

In one or more embodiments, the positive electrode active material may have a disordered rocksalt (DRX) structure, and the disordered rocksalt structure may be a new structure of the positive electrode active material that is different from the existing layered type or kind, spinel, olivine, and/or the like and may be characterized by a disordered intercalation/deintercalation path of lithium ions within the crystal structure.

A positive electrode active material having such a disordered rocksalt structure may have the advantage or benefit of being able to realize a capacity of over 300 mAh/g, which is higher than a positive electrode active material having a layered crystal structure, which realizes a capacity of approximately 270 mAh/g.

However, positive electrode active materials having a disordered rocksalt structure may have the disadvantages of low ionic conductivity due to slow lithium ion movement, problems with side reactions with the electrolyte solution due to the very high upper limit voltage of 4.6 V or higher required or desired for operation, and poor cycle-life characteristics due to an unstable crystal structure.

Accordingly, one or more embodiments of the present disclosure provide a positive electrode active material having a disordered rocksalt structure that is capable of improving or enhancing capacity characteristics (e.g., high initial charge/discharge capacity) and cycle-life characteristics by enhancing the movement speed of lithium ions, thereby solving the problems of low ionic conductivity and low cycle-life characteristics due to transition metal elution.

The low ionic conductivity of the positive electrode active material having a disordered rocksalt structure may slow down the diffusion rate of lithium within the positive electrode active material, which limits its application to cells that charge and discharge at high rates, or there may be a problem that the particle size should be limited to the nanoscale to shorten the ion diffusion distance if (e.g., when) applied to high-rate charge and discharge cells. If (e.g., when) the particle size is limited to the nanoscale in this way, the plate density may be greatly or substantially reduced, and it may be difficult to control the characteristics of the slurry, making it difficult to produce high-quality electrode plates.

The positive electrode active material having a disordered rocksalt structure may have a very low cycle-life during charge and discharge, and thus the actual usable number of charge and discharge cycles may only be several dozen, which is inferior to that of the materials that are generally available.

The oxidation numbers of transition metal elements, such as Mn, Fe, Co, Ni, Cr, and V, which compose the positive electrode active material having this disordered rocksalt structure and directly participate in the redox reaction and contribute to the capacity exhibition, may have one or more values, such as +2, +3, +4, +5, +6, and/or the like, rather than a single value. In one or more embodiments, by controlling the ratio of transition metal elements having an oxidation number of +2 to a low value, ionic conductivity may be improved or enhanced, thereby improving or enhancing charge/discharge performance, and a positive electrode active material including the transition metal elements may be proposed.

In one or more embodiments, a strategy may be taken to increase or enhance ionic conductivity by utilizing the increase in connectivity of Li ion diffusion paths by increasing the Li/Me ratio (e.g., the molar ratio of lithium (Li) to the total molar amount of transition metals (Me)) by adding an excess of Li to a positive electrode active material having a disordered rocksalt structure. However, this strategy may have the disadvantage of increasing a proportion of O-redox reactions that cause deterioration of the crystal structure, and decreasing the volume density of the material as the amount of Li increases.

Accordingly, one or more embodiments of the present disclosure provide a positive electrode active material that is capable of improving or enhancing both (e.g., simultaneously) capacity characteristics (e.g., initial charge/discharge capacity) and cycle-life characteristics by improving or enhancing ionic conductivity by controlling the ratio of $M^1$ having an oxidation number of +2 based on a total of 100 at% of $M^1$ to a low ratio without increasing the amount of Li.

According to one or more embodiments, a positive electrode active material includes a compound represented by Chemical Formula 1.

Chemical Formula 1            $A_xM^1_{2-x-y}M^2_yO_{2-a}X_a$

In Chemical Formula 1, A is one or more elements selected from Li and Na, $M^1$ is one or more elements selected from among Mn, Fe, Co, Ni, Cr, and V, $M^2$ is one or more elements selected from among Ti, Zr, Nb, Mo, Ta, and W, X is a halogen element, x/(2-x)>1.1, 0<y<1, and 0≤a≤0.5.

For example, in Chemical Formula 1, $M^1$ may be one or more elements selected from among Mn, Co, and Ni, and, for example, $M^1$ may be Mn. If (e.g., when) this is satisfied, a positive electrode active material having a disordered rocksalt structure and excellent or suitable ionic conductivity may be secured.

For example, in Chemical Formula 1, $M^2$ may be one element selected from Ti and Zr, or $M^2$ may be one or more elements selected from Ti and Zr, and, for example, $M^2$ may be Ti. If (e.g., when) this is satisfied, a positive electrode active material having a disordered rocksalt structure and excellent or suitable ionic conductivity may be secured.

For example, in Chemical Formula 1, $1 < x \leq 1.33$, $1.1 \leq x \leq 1.3$, or $1.15 \leq x \leq 1.25$ may be satisfied. If (e.g., when) this is satisfied, it may be advantageous or beneficial for exhibition of excellent or suitable capacity characteristics (e.g., high initial charge/discharge capacity) and cycle-life characteristics.

For example, in Chemical Formula 1, $0.1 \leq y \leq 0.8$, $0.1 \leq y \leq 0.5$, or $0.1 \leq y \leq 0.4$ may be satisfied. If (e.g., when) this is satisfied, it may be advantageous or beneficial for exhibition of excellent or suitable capacity characteristics (e.g., high initial charge/discharge capacity) and cycle-life characteristics.

In Chemical Formula 1, $0 \leq a \leq 0.5$, for example, $0 < a \leq 0.5$, $0.1 \leq a \leq 0.3$, or $0.1 \leq a \leq 0.2$ may be satisfied, and if (e.g., when) these are satisfied, it may be advantageous or beneficial for exhibition of excellent or suitable capacity characteristics (e.g., high initial charge/discharge capacity) and cycle-life characteristics.

In the positive electrode active material, the ratio of $M^1$ having an oxidation number of +2 based on a total of 100 at% of $M^1$ is less than or equal to about 25 at%, for example, in the range of about 0 at% to about 25 at%, about 2 at% to about 25 at%, about 9 at% to about 25 at%, about 12 at% to about 19 at%, about 15 at% to about 19 at%, or about 16 at% to about 18.5 at%. If (e.g., when) calculating the energy required or desired for lithium to diffuse within the disordered rocksalt structure of the positive electrode active material using first-principle calculations, it is found that the greater the energy difference between adjacent sites within the crystal structure, the greater the energy required or desired to move between two adjacent sites. The energy difference between adjacent positions may be due to the difference in volume at each position, and the volume occupied by a single transition metal element may be greatly or substantially affected by its oxidation number. Therefore, as the oxidation number of the transition metal in the positive electrode active material having a disordered rocksalt structure becomes more diverse, the energy required or desired for lithium to diffuse may increase, which hinders diffusion. In one or more embodiments, the oxidation number of the positive electrode active material having a disordered rocksalt structure may decrease due to an overreduction reaction during charge and discharge. However, in the case of a positive electrode active material having a disordered rocksalt structure in which the oxidation numbers of $M^1$ are distributed into three types or kinds of +2, +3, or +4 through overreduction, compared to a positive electrode active material having a disordered rocksalt structure in which the oxidation numbers of $M^1$ are distributed into two types or kinds of +3 or +4 through overreduction, 2+ ions may be easily eluted through the electrolyte solution, and if (e.g., when) the transition metal is eluted in this way, the crystal structure may deteriorate compared to the one that is generally available, which adversely affects cycle-life characteristics, such as the capacity retention rate. Therefore, preventing the generation of 2+ ions through overreduction by increasing the overall oxidation number may be suitable to improve or enhance the cycle-life characteristics of a positive electrode active material having a disordered rocksalt structure. Accordingly, one or more embodiments of the present disclosure provide a positive electrode active material having a disordered rocksalt structure, in which the ratio of $M^1$ having an oxidation number of +2 based on a total of 100 at% of transition metal element $M^1$ is controlled to be less than or equal to about 25 at%, thereby improving or enhancing ionic conductivity characteristics, and thus enhancing capacity characteristics (e.g., high initial charge/discharge capacity) and cycle-life characteristics.

For example, the oxidation number of $M^1$ may be one or more selected from among +2, +3, and +4. As the oxidation number of the transition metal in the positive electrode active material having a disordered rocksalt structure becomes more diverse, the energy required or desired for lithium to diffuse increases, which hinders diffusion. Therefore, reducing the number of oxidation number types or kinds in the positive electrode active material having a disordered rocksalt structure may be a beneficial strategy to improve or enhance the ionic conductivity characteristics of the positive electrode active material. For example, to improve or enhance the ionic conductivity characteristics, a strategy to reduce the number of transition metal oxidation states may be required or desirable, and to improve or enhance cycle-life characteristics, an overall increase in the oxidation state may be required or desirable. Therefore, the positive electrode active material having a disordered rocksalt structure in which the oxidation number of $M^1$ is limited to +2, +3, and +4 may be a material in which both (e.g., simultaneously) ionic conductivity and cycle-life characteristics are improved or enhanced by applying all of the strategies as described herein.

For example, a ratio of $M^1$ having an oxidation number of +3 based on the total $M^1$ (e.g., based on a total of 100 at% of $M^1$) may be greater than or equal to about 35 at%, for example, in the range of about 35 at% to about 60 at%, about 35 at% to about 55 at%, or about 35 at% to about 51 at%. As the oxidation number of $M^1$ increases in the total $M^1$ (e.g., based on a total of 100 at% of $M^1$), cycle-life characteristics may be improved or enhanced. Therefore, if (e.g., when) the ratio of $M^1$ having an oxidation number of +3 in the total $M^1$ (e.g., based on a total of 100 at% of $M^1$) satisfies the foregoing range, the effect of improving or enhancing the capacity characteristics (e.g., high initial charge/discharge capacity) may be harmoniously or concurrently achieved along with the effect of improving or enhancing cycle-life characteristics.

For example, a ratio of $M^1$ having an oxidation number of +4 based on the total $M^1$ (e.g., based on a total of 100 at% of $M^1$) may be greater than or equal to about 25 at%, for example, in the range of about 25 at% to about 60 at%, about 30 at% to about 50 at%, or about 30 at% to about 45 at%. As the oxidation number of $M^1$ increases in the total $M^1$ (e.g., based on a total of 100 at% of $M^1$), cycle-life characteristics may be improved or enhanced. Therefore, if (e.g., when) the ratio of $M^1$ having an oxidation number of +4 in the total $M^1$ (e.g., based on a total of 100 at% of $M^1$) satisfies the foregoing range, the effect of improving or enhancing the capacity characteristics (e.g., high initial charge/discharge capacity) may be harmoniously or concurrently achieved along with the effect of improving or enhancing cycle-life characteristics.

For example, an average oxidation number of $M^1$ in Chemical Formula 1 may be greater than or equal to about +3, for example, in the range of about +3 to about +5, about +3.1 to about +4, or about +3.1 to about +3.5

If (e.g., when) this is satisfied, the ionic conductivity of the positive electrode active material having a disordered rocksalt structure may be efficiently or suitably improved or enhanced, which may be advantageous or beneficial in securing excellent or suitable capacity characteristics (e.g., high initial charge/discharge capacity) and cycle-life characteristics.

In one or more embodiments, the positive electrode active material may satisfy Equation 1. If (e.g., when) this is satisfied, the effect of improving or enhancing capacity characteristics (e.g., high initial charge/discharge capacity) and cycle-life characteristics may be maximized or enhanced.

## Equation 1

$$0.35 \leq R_1/(R_2 + R_3) \leq 0.65$$

In Equation 1, $R_1$ represents the ratio of $M^1$ having an oxidation number of +4 based on a total of 100 at% of $M^1$, $R_2$ represents the ratio of $M^1$ having an oxidation number of +2 based on a total of 100 at% of $M^1$, and $R_3$ represents the ratio of $M^1$ having an oxidation number of +3 based on a total of 100 at% of $M^1$.

In one or more embodiments, the oxidation number of $M^1$ in the positive electrode active material may be obtained by preparing a positive electrode and a battery (e.g., a rechargeable lithium battery) including the positive electrode (for example, a half-cell manufactured utilizing a negative electrode of a lithium counter electrode) including the positive electrode so as to include a positive electrode active material layer including the positive electrode active material, then performing one charge/discharge cycle in the range of about 1.5 V to about 4.8 V, and then disassembling the battery and collecting only the positive electrode to measure XPS.

For example, the positive electrode active material may have a difference between the maximum and minimum values of the volume of the octahedron formed by lithium and the nearest oxygen within the crystal structure of less than or equal to about 3.6 $Å^3$, for example, in the range of about 3.0 $Å^3$ to about 3.6 $Å^3$, about 3.1 $Å^3$ to about 3.6 $Å^3$, or about 3.1 $Å^3$ to about 3.36 $Å^3$.

It is generally understood that a positive electrode active material having a disordered rocksalt structure has an octahedral crystal structure and that oxygen is at each of the eight vertices of the octahedron. The difference between the maximum and minimum volume values of the octahedron formed by lithium and the nearest oxygen in the disordered rocksalt structure of these positive electrode active materials may be understood as a path through which lithium moves. Therefore, it is generally assumed that the larger the difference between the maximum and minimum values, the slower the movement speed of lithium ions, and the smaller the difference, the faster the movement speed of lithium ions. For example, if (e.g., when) the difference between the maximum and minimum values of the volume of the octahedron formed by lithium and the nearest oxygen within the crystal structure satisfies the foregoing range, the movement speed of lithium ions may be improved or enhanced, thereby effectively or suitably contributing to securing excellent or suitable capacity characteristics (e.g., high initial charge/discharge capacity).

For example, the positive electrode active material may further include a coating layer including a conductive (e.g., electrically conductive) material on the surface, and the conductive material may be utilized to provide conductivity (e.g., electrical conductivity) to the electrode, and any suitable electronically conductive material that does not cause a chemical change (e.g., an undesirable chemical change) may be utilized. Examples of the conductive (e.g., electrically conductive) materials may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminium, silver, and/or the like; a conductive (e.g., electrically conductive) polymer, such as polyphenylene and/or a polyphenylene derivative; or a mixture thereof, and carbon black may be utilized as an example.

For example, the positive electrode active material may include a core particle containing the compound represented by Chemical Formula 1 or a lithium manganese-based composite oxide described below, and a coating layer disposed on a surface of the core particle and including the conductive material.

One or more embodiments of the present disclosure provide a positive electrode active material including a lithium manganese-based composite oxide, wherein a ratio of manganese having an oxidation number of +2 in total manganese (e.g., based on a total of 100 at% of manganese) is less than or equal to about 25 at%. In one or more embodiments, because the foregoing explanation may be applied substantially equally to the positive electrode active material, redundant explanation may not be provided.

For example, the positive electrode active material may have a disordered rocksalt structure, and the lithium manganese-based composite oxide may refer to a composite oxide including lithium and manganese and may further include an additional transition metal in addition to the manganese.

The positive electrode active material may be a compound capable of reversibly intercalating and deintercalating lithium or sodium (e.g., a lithiated intercalation compound) and may be the positive electrode active material as described in one or more embodiments.

**Method for Preparing Positive Electrode Active Material**

In one or more embodiments, a method for preparing a positive electrode active material includes: obtaining a mixture of an A-containing carbonate, an $M^1$-containing oxide, and an $M^2$-containing oxide in an alcoholic solvent, heat-treating the mixture at a temperature in the range of about 900 °C to about 1500 °C under an inert gas atmosphere, wherein A is one or more elements selected from Li and Na, $M^1$ is one or more elements selected from among Mn, Fe, Co, Ni, Cr, and V, $M^2$ is one or more elements selected from among Ti, Zr, Nb, Mo, Ta, and W, and the $M^1$-containing oxide includes $M^1_2O_3$ and $M^1O_2$.

The foregoing description is about a method for preparing a positive electrode active material according to one or more embodiments. Hereinafter, redundant descriptions of the positive electrode active material may not be provided, and the processes for preparing the positive electrode active material according to one or more embodiments will be described in more detail.

First, a mixture is obtained by mixing an A-containing carbonate, an $M^1$-containing oxide, and an $M^2$-containing oxide in an alcoholic solvent. Herein, A is one or more elements selected from Li and Na, $M^1$ is one or more elements selected from among Mn, Fe, Co, Ni, Cr, and V, and $M^2$ is one or more elements selected from among Ti, Zr, Nb, Mo, Ta, and W.

For example, the mixture may further include an A-containing halide.

The $M^1$-containing oxide includes $M^1_2O_3$ and $M^1O_2$, and, for example, the $M^1$-containing oxide may be $Mn_2O_3$ and $MnO_2$.

For example, the A-containing carbonate may be $Li_2CO_3$, the A-containing halide may be LiF, and the $M^2$-containing oxide or hydroxide may be $TiO_2$, $Zr(OH)_4$, or a combination thereof.

For example, the alcoholic solvent may be an alcoholic solvent having 1 to 10 carbon atoms, such as ethanol, propanol, butanol, and/or the like, and, for example, may be anhydrous ethanol.

In one or more embodiments, the mixing (e.g., the obtaining of the mixture) may be performed by a wet process using ball milling. The positive electrode active material having a disordered rocksalt structure that is generally available may be prepared using a planetary ball milling method. This generally-available method may involve placing raw material powder and balls in equipment that applies high energy, applying a high-energy milling method using a dry process, and preparing a positive electrode active material using the physical energy and/or thermal energy applied during milling.

In one or more embodiments, a preparing method of simply mixing and then heat-treating by applying ball milling with low energy using a wet process using an alcoholic solvent may be applied, so that (e.g., such that) the process cost is reduced compared to the generally-available method, which may be advantageous or beneficial if (e.g., when) applied to a mass production process.

As an example, the ball milling may be performed using yittria-stabilized zirconia (YSZ) balls. For example, the diameter of the ball may be in the range of about 1 mm to about 10 mm or about 3 mm to about 8 mm, and the ball milling may be performed at a speed in the range of about 100 rpm to about 1000 rpm, about 150 rpm to about 700 rpm, or about 200 rpm to about 500 rpm, and may be performed for about 2 hours to about 20 hours, about 5 hours to about 18 hours, or about 10 hours to about 15 hours. If (e.g., when) this is satisfied, the oxidation number of $M^1$ among the final obtained positive electrode active materials may be efficiently or suitably controlled within the desired range.

In one or more embodiments, after obtaining the mixture (e.g., after the obtaining of the mixture), a drying process may further be included, and a powder form of the mixture may be obtained through the drying. The drying (e.g., the drying process) may be performed at a temperature in the range of about 50 °C to about 200 °C, about 60 °C to about 150 °C, or about 70 °C to about 100 °C, and may be performed for about 5 hours to about 30 hours, about 8 hours to about 20 hours, or about 10 hours to about 15 hours. If (e.g., when) this is satisfied, the oxidation number of $M^1$ among the final obtained positive electrode active materials may be efficiently or suitably controlled within the desired range.

Next, the mixture is heat-treated under an inert gas atmosphere. For example, the inert gas may include He, Ar, $N_2$, or a combination thereof.

In one or more embodiments, the heat-treatment is performed at a temperature in the range of about 900 °C to about 1500 °C, for example, about 1000 °C to about 1400 °C, or about 1100 °C to about 1300 °C, and may be performed for about 2 hours to about 10 hours, about 3 hours to about 9 hours, or about 4 hours to about 8 hours. If (e.g., when) this is satisfied, the oxidation number of $M^1$ among the obtained positive electrode active materials may be efficiently or suitably controlled within the desired range.

For example, the heat-treatment (e.g., the heat-treating of the mixture) may be performed at a heating rate in the range of about 1 °C/min to about 10 °C/min, about 3 °C/min to about 8 °C/min, or about 5 °C/min to about 7 °C/min, and then within the heat-treatment temperature range. If (e.g., when) this is satisfied, the oxidation number of $M^1$ among the

obtained positive electrode active materials may be efficiently or suitably controlled within the desired range.

In one or more embodiments, before the heat-treatment, compressing process may further be included. For example, the method may further include compressing the mixture before the heat-treatment, and the heat-treatment may be performed on the compressed product.

## Positive Electrode

In one or more embodiments, a positive electrode includes: a positive electrode current collector; and a positive electrode active material layer provided on the positive electrode current collector and including the positive electrode active material as described in one or more embodiments.

The positive electrode active material layer may further include a binder, a conductive (e.g., electrically conductive) material, or a combination thereof in addition to the positive electrode active material as described in one or more embodiments.

## Binder

The binder may improve or enhance binding properties of positive electrode active material particles with one another and with a positive electrode current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

## Conductive Material

The conductive material may be included to provide electrode conductivity (e.g., electrical conductivity) and any suitable electrically conductive material may be utilized as a conductive (e.g., electrically conductive) material unless it causes a chemical change (e.g., an undesirable chemical change). Examples of the conductive material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminium, silver, and/or the like; a conductive (e.g., electrically conductive) polymer, such as polyphenylene and/or a polyphenylene derivative; or a mixture thereof.

Each amount of the binder and the conductive material may be in the range of about 0.5 wt% to about 100 wt%, or about 0.5 wt% to about 5 wt% based on 100 wt% of the positive electrode active material layer.

The positive electrode current collector may include aluminium (Al), but embodiments of the present disclosure are not limited thereto.

For example, the electrode plate density of the positive electrode may be greater than or equal to about 1.8 g/cc, for example, in the range of about 1.8 g/cc to about 2.5 g/cc, about 1.85 g/cc to about 2.2 g/cc, or about 1.86 g/cc to about 2.0 g/cc.

## Rechargeable Battery

In one or more embodiments, a rechargeable battery (e.g., a rechargeable lithium battery) includes a positive electrode; a negative electrode; and an electrolyte; wherein the positive electrode includes a positive electrode current collector; and a positive electrode active material layer disposed or provided on the positive electrode current collector and including the positive electrode active material prepared by the manufacturing method as described in one or more embodiments.

For example, a rechargeable battery (e.g., a rechargeable lithium battery) may include a positive electrode, a negative electrode, a separator between the positive electrode and the negative electrode, and an electrolyte solution.

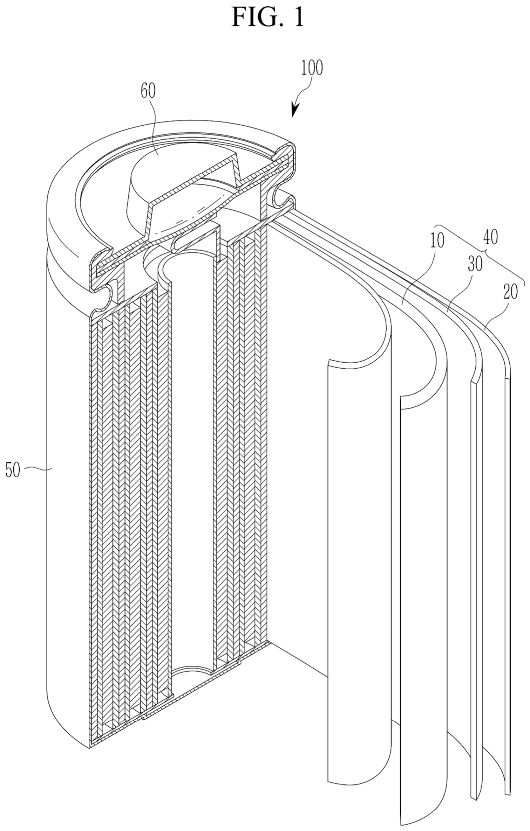

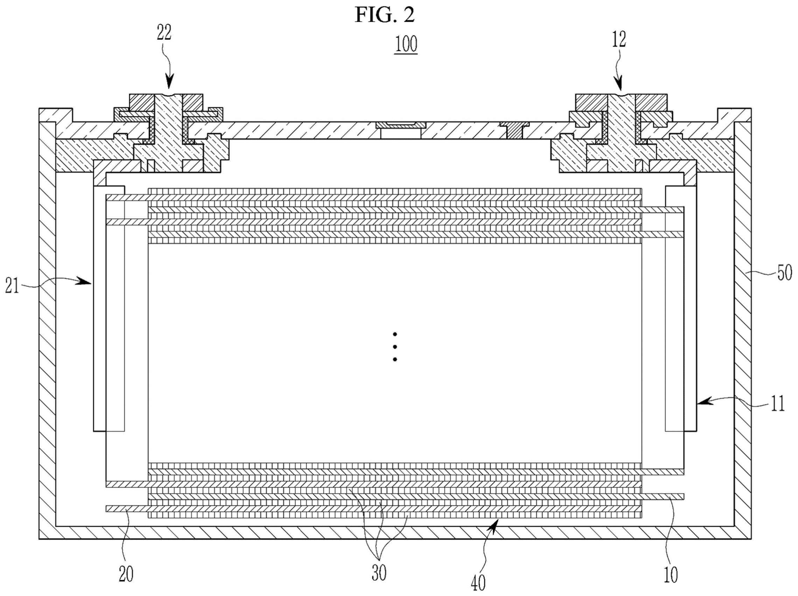

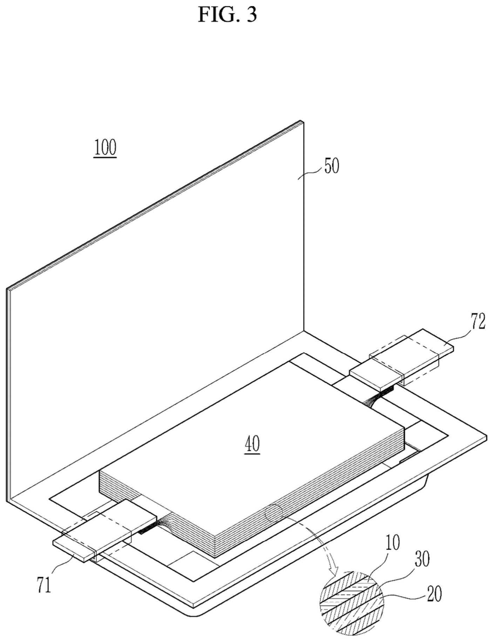

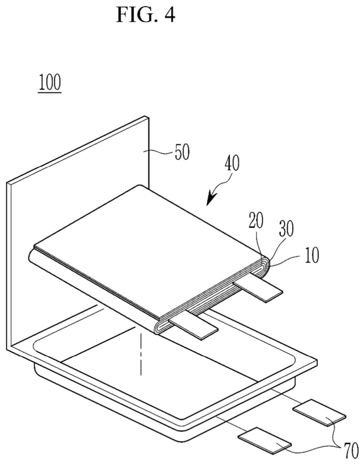

The rechargeable lithium battery may be classified into cylindrical, prismatic, pouch, coin, and/or the like depending on the shape. FIGS. 1 to 4 each is a schematic view illustrating the rechargeable lithium battery according to one or more embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 may include an electrode assembly 40 with a separator 30 between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as illustrated in FIG. 1. Also, in FIG. 2, the rechargeable lithium battery 100 may include a positive electrode lead tab 11, a positive electrode terminal 12, a negative electrode lead tab 21, and a negative electrode terminal 22. As illustrated in FIGS. 3 and 4, the rechargeable lithium battery 100 may include an electrode tab 70, for example, a positive electrode tab 71 and a negative electrode tab 72 that serve as an electrical path to induce the current formed in the electrode assembly 40 to the outside.

**Negative Electrode**

The negative electrode may include a negative electrode current collector; and a negative electrode active material layer on the negative electrode current collector, wherein the negative electrode active material layer includes a negative electrode active material, and may further include a binder, a conductive (e.g., electrically conductive) material, or a combination thereof.

**Negative Electrode Active Material**

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous (e.g., non-crystalline) carbon, or a combination thereof as a carbon-based negative electrode active material. The crystalline carbon may be irregular, or sheet (e.g., substantially sheet), flake (e.g., substantially flake), spherical (e.g., substantially spherical), or fiber (e.g., substantially fiber) shaped natural graphite or artificial graphite. The amorphous carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material or a Sn-based negative electrode active material. The Si-based negative electrode active material may include silicon, a silicon-carbon composite, $SiO_x$ (wherein $0 < x \leq 2$; e.g., $SiO_2$), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and a combination thereof, for example, Mg, Ca, Sr, Ba, Ra, scandium (Sc), yttrium (Y), Ti, Zr, hafnium (Hf), rutherfordium (Rf), V, Nb, Ta, dubnium (Db), Cr, Mo, W, seaborgium (Sg), technetium (Tc), rhenium (Re), bohrium (Bh), iron (Fe), Pb, ruthenium (Ru), osmium (Os), hassium (Hs), rhodium (Rh), iridium (Ir), palladium (Pd), platinum (Pt), copper (Cu), silver (Ag), gold (Au), Zn, cadmium (Cd), boron (B), Al, gallium (Ga), Sn, In, thallium (TI), Ge, phosphorus (P), arsenic (As), Sb, bismuth (Bi), sulfur (S), selenium (Se), tellurium (Te), polonium (Po), and a combination thereof), or a combination thereof. The Sn-based negative electrode active material may be Sn, $SnO_k$ (wherein $0 < k \leq 2$; e.g., $SnO_2$), a Sn alloy, or a combination thereof.

The silicon-carbon composite may be a composite of silicon and amorphous (e.g., non-crystalline) carbon. An average particle diameter ($D_{50}$) of the silicon-carbon composite particles may be, for example, in the range of about 0.5 $\mu$m to about 20 $\mu$m. According to one or more embodiments, the silicon-carbon composite may be in the form of silicon particles and amorphous (e.g., non-crystalline) carbon coated on the surface of the silicon particles. For example, it may include a secondary particle (core) in which silicon primary particles are assembled and an amorphous (e.g., non-crystalline) carbon coating layer (shell) on the surface of the secondary particle. The amorphous carbon may also be present between the silicon primary particles, for example, the silicon primary particles may be coated with amorphous (e.g., non-crystalline) carbon. The secondary particles may exist dispersed in an amorphous (e.g., non-crystalline) carbon matrix.

The silicon-carbon composite may further include crystalline carbon. For example, the silicon-carbon composite may include a core including crystalline carbon and silicon particles and an amorphous (e.g., non-crystalline) carbon coating layer on the surface of the core. The crystalline carbon may be artificial graphite, natural graphite, or a combination thereof. The amorphous carbon may include soft carbon, hard carbon, a mesophase pitch carbonized product, and/or calcined coke.

If (e.g., when) the silicon-carbon composite includes silicon and amorphous (e.g., non-crystalline) carbon, an amount of silicon may be in the range of about 10 wt% to about 50 wt% and an amount of amorphous (e.g., non-crystalline) carbon may be in the range of about 50 wt% to about 90 wt% based on 100 wt% of the silicon-carbon composite. Also, if (e.g., when) the composite includes silicon, amorphous (e.g., non-crystalline) carbon, and crystalline carbon, an amount of the silicon may be in the range of about 10 wt% to about 50 wt%, an amount of the crystalline carbon may be in the range of about 10 wt% to about 70 wt%, and an amount of the amorphous carbon may be in the range of about 20 wt% to about 40 wt% based on 100 wt% of the silicon-carbon composite.

In one or more embodiments, a thickness of the amorphous carbon coating layer may be in the range of about 5 nm to about 100 nm. An average particle diameter ($D_{50}$) of the silicon particles (primary particles) may be in the range of about 10 nm to about 1 $\mu$m or about 10 nm to about 200 nm. The silicon particles may exist as silicon alone, in the form of a silicon alloy, or in an oxidized form. The oxidized form of silicon may be represented by $SiO_x$ (wherein $0 < x \leq 2$; e.g., $SiO_2$). At this time, the atomic content (e.g., amount) ratio of Si:O, which indicates a degree of oxidation, may be in the range of about 99:1 to about 33:67. As used herein, if (e.g., when) a definition is not otherwise provided, an average particle diameter ($D_{50}$) indicates a diameter of a particle where an accumulated volume is about 50 volume% in a particle distribution.

The Si-based negative electrode active material or Sn-based negative electrode active material may be mixed with the carbon-based negative electrode active material. If (e.g., when) the Si-based negative electrode active material or the Sn-based negative electrode active material and the carbon-based negative electrode active material are mixed and utilized, the mixing ratio may be a weight ratio of about 1:99 to about 90:10.

**Binder**

The binder may serve to well or suitably adhere the negative electrode active material particles to each other and also to adhere the negative electrode active material to the negative electrode current collector. The binder may be a non-aqueous (e.g., water-insoluble) binder, an aqueous (e.g., water-soluble) binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If (e.g., when) an aqueous (e.g., water-soluble) binder is utilized as the negative electrode binder, a cellulose-based compound capable of imparting or increasing viscosity may further be included. As the cellulose-based compound, one or more of carboxymethyl cellulose, hydroxypropylmethyl cellulose, methyl cellulose, or alkali metal salts thereof may be mixed and utilized. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

**Conductive Material**

The conductive material may be included to provide electrode conductivity (e.g., electrical conductivity) and any suitable electrically conductive material may be utilized as a conductive (e.g., electrically conductive) material unless it causes a chemical change (e.g., an undesirable chemical change). Examples of the conductive material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminium, silver, and/or the like; a conductive (e.g., electrically conductive) polymer, such as polyphenylene and/or a polyphenylene derivative; or a mixture thereof.

An amount of the negative electrode active material may be in the range of about 95 wt% to about 99.5 wt% based on 100 wt% of the negative electrode active material layer, and an amount of the binder may be in the range of about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, in the range of about 1 $\mu$m to about 20 $\mu$m, about 5 $\mu$m to about 15 $\mu$m, or about 7 $\mu$m to about 10 $\mu$m.

**Electrolyte**

For example, the electrolyte for a rechargeable lithium battery may be an electrolyte solution, which may include a non-aqueous (e.g., water-insoluble) organic solvent and a lithium salt.

The non-aqueous organic solvent may serve as a medium to transmit ions taking part in the electrochemical reaction of a battery (e.g., a rechargeable lithium battery). The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethanol, isopropyl alcohol, and/or the like, and the aprotic solvent may include nitriles, such as R-CN (wherein R is a C2 to C20 linear, branched, or cyclic hydrocarbon group, a double bond, an aromatic ring, or an ether group, and/or the like); amides, such as dimethylformamide; dioxolanes, such as 1,3-dioxolane, 1,4-dioxolane, and/or the like; sulfolanes; and/or the like.

The non-aqueous organic solvent may be used alone or in a mixture of two or more types or kinds, and if (e.g., when) two or more types or kinds are used in a mixture, a mixing ratio may be appropriately or suitably adjusted according to the desired battery performance, which is generally known to those working in the field.

If (e.g., when) using a carbonate-based solvent, a cyclic carbonate and a chain carbonate may be mixed and used, and the cyclic carbonate and the chain carbonate may be mixed in a volume ratio in the range of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio in the range of about 1:1 to about 30:1.

The electrolyte solution may further include vinylethylene carbonate, vinylene carbonate, and/or an ethylene carbonate-based compound to improve or enhance battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent may supply lithium ions in a battery (e.g., a rechargeable lithium battery), enable a basic operation of a rechargeable lithium battery, and improve or enhance transportation of the lithium ions between the positive electrode and the negative electrode. Examples of the lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl) imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. If (e.g., when) the concentration of lithium salt is within the foregoing range, the electrolyte solution may have appropriate or suitable ionic conductivity and viscosity, and thus excellent or suitable performance may be achieved and lithium ions may move effectively or suitably.

## Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film, such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one surface or both surfaces (e.g., two opposite (opposite facing) surfaces) of the porous substrate.

The porous substrate may be a polymer film formed or composed of any one polymer selected from among polyolefin, such as polyethylene and polypropylene, polyester, such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (PTFE; e.g., Teflon™), or a copolymer or mixture of two or more thereof.

The porous substrate may have a thickness of about 1 $\mu$m to about 40 $\mu$m, for example, about 1 $\mu$m to about 30 $\mu$m, about 1 $\mu$m to about 20 $\mu$m, about 5 $\mu$m to about 15 $\mu$m, or about 10 $\mu$m to about 15 $\mu$m.

The organic material may include a (meth)acrylic copolymer including a first structural unit derived from (meth)acrylamide and a second structural unit including at least one selected from a structural unit derived from (meth)acrylic acid or (meth)acrylate and a structural unit derived from (meth)acrylamidosulfonic acid or a salt thereof.

The inorganic material may include inorganic particles selected from among $Al_2O_3$, $SiO_2$, $TiO_2$, $SnO_2$, $CeO_2$, $MgO$, $NiO$, $CaO$, $GaO$, $ZnO$, $ZrO_2$, $Y_2O_3$, $SrTiO_3$, $BaTiO_3$, $Mg(OH)_2$, boehmite, and a combination thereof, but embodiments of the present disclosure are not limited thereto. An average particle diameter ($D_{50}$) of the inorganic particles may be in the range of about 1 nm to about 2000 nm, for example, about 100 nm to about 1000 nm or about 100 nm to about 700 nm.

The organic material and the inorganic material may be mixed in one coating layer, or a coating layer including an organic material and a coating layer including an inorganic material may be stacked.

The thickness of the coating layer may be in the range of about 0.5 $\mu$m to about 20 $\mu$m, for example, about 1 $\mu$m to about 10 $\mu$m or about 1 $\mu$m to about 5 $\mu$m.

Examples and Comparative Examples of the present disclosure are described herein. However, the following examples are only examples of the present disclosure, and embodiments of the present disclosure are not limited to the following examples.

## Example 1

### 1. Preparation of Positive Electrode Active Material

$Li_2CO_3$, $Mn_2O_3$, $MnO_2$, $TiO_2$, and LiF were respectively weighed in each mass of 2.498 g, 2.205 g, 0.486 g, 0.893 g, and 0.145 g and after adding 200 g of 5 mm balls made of YSZ thereto, wet-milled with anhydrous ethanol at 200 rpm for 12 hours, to create a mixture. The mixture was dried at 70 °C for 12 hours, leaving powder alone. 2 g of the powder was compressed under a pressure of 20 MPa into a pellet with a diameter of 20 mm. The manufactured pellet was heat-treated at 1100 °C for 4 hours by increasing a temperature at 5 °C /min in a tube furnace under an Ar atmosphere to obtain a material having a composition of $Li_{1.2}Mn_{0.6}Ti_{0.2}O_{1.9}F_{0.1}$. Subsequently, the material having the composition of $Li_{1.2}Mn_{0.6}Ti_{0.2}O_{1.9}F_{0.1}$ and carbon black were respectively weighed by each mass of 0.7 g and 0.1 g and after adding five 10 mm balls made of silicon nitride thereto, dry-milled at 300 rpm for 6 hours to manufacture a positive electrode active material in which a coating layer containing the carbon black was formed or provided on the surface of the particles having the composition of $Li_{1.2}Mn_{0.6} Ti_{0.2}O_{1.9}F_{0.1}$

### 2. Manufacturing of Rechargeable Lithium Battery Cell

80 wt% of the manufactured positive electrode active material, 10 wt% of a polyvinylidene fluoride binder, and 10 wt% of a carbon black conductive (e.g., electrically conductive) material were mixed to prepare a positive electrode active material layer slurry. The positive electrode active material layer slurry was coated on an aluminium foil current collector and then, dried and compressed to manufacture a positive electrode having electrode plate density of 1.86 g/cc.

Subsequently, the positive electrode was utilized with a lithium metal counter electrode to manufacture a half-cell, wherein a polytetrafluoroethylene separator was disposed or provided between the positive electrode and the lithium metal counter electrode, and an electrolyte prepared by dissolving 1 M $LiPF_6$ in a mixed solvent of ethylene carbonate and dimethyl carbonate in a volume ratio of 1:1 was utilized to manufacture the half-cell as a rechargeable lithium battery cell in a common method.

## Example 2

A positive electrode active material and a rechargeable lithium battery cell were manufactured in substantially the same manner as in Example 1 except that $Li_2CO_3$, $Mn_2O_3$, $MnO_2$, $TiO_2$, and LiF were respectively weighed in each mass of 2.482 g, 2.191 g, 0.965 g, 0.444 g, and 0.144 g and then, mixed so that (e.g., such that) the positive electrode active material had a composition of $Li_{1.2}Mn_{0.7}Ti_{0.1}O_{1.9}F_{0.1}$ in preparing the positive electrode active material.

## Example 3

A positive electrode active material and a rechargeable lithium battery cell were manufactured in substantially the same manner as in Example 1 except that $Li_2CO_3$, $Mn_2O_3$, $MnO_2$, and $TiO_2$ were respectively weighed in each mass of 2.570 g, 1.308 g, 0.480 g, and 1.765 g and then, mixed so that (e.g., such that) the positive electrode active material had a composition of $Li_{1.2}Mn_{0.4}Ti_{0.4}O_2$ in preparing the positive electrode active material.

## Example 4

A positive electrode active material and a rechargeable lithium battery cell were manufactured in substantially the same manner as in Example 1 except that $Li_2CO_3$, $Mn_2O_3$, $MnO_2$, and $Zr(OH)_4$ were respectively weighed in each mass of 1.854 g, 0.943 g, 0.346 g, and 2.945 g and then, mixed so that (e.g., such that) the positive electrode active material had a composition of $Li_{1.2}Mn_{0.4}Zr_{0.4}O_2$ in preparing the positive electrode active material.

**Comparative Example 1**

A positive electrode active material and a rechargeable lithium battery cell were manufactured in substantially the same manner as in Example 1 except that $Li_2CO_3$, $Mn_2O_3$, $TiO_2$, and LiF were respectively weighed in each mass of 2.514 g, 2.220 g, 1.348 g, and 0.146 g and then, mixed so that (e.g., such that) the positive electrode active material had a composition of $Li_{1.2}Mn_{0.5}Ti_{0.3}O_{1.9}F_{0.1}$ in preparing the positive electrode active material.

**Example 5**

A positive electrode active material and a rechargeable lithium battery cell were manufactured in substantially the same manner as in Example 1 except that $Li_2CO_3$, MnO, $Mn_2O_3$, and $TiO_2$ were respectively weighed in each mass of 2.730 g, 0.397 g, 0.884 g, and 2.237 g and then, mixed so that (e.g., such that) the positive electrode active material had a composition of $Li_{1.2}Mn_{0.3}Ti_{0.5}O_2$ in preparing the positive electrode active material.

**Evaluation Example 1: Oxidation Number Evaluation**

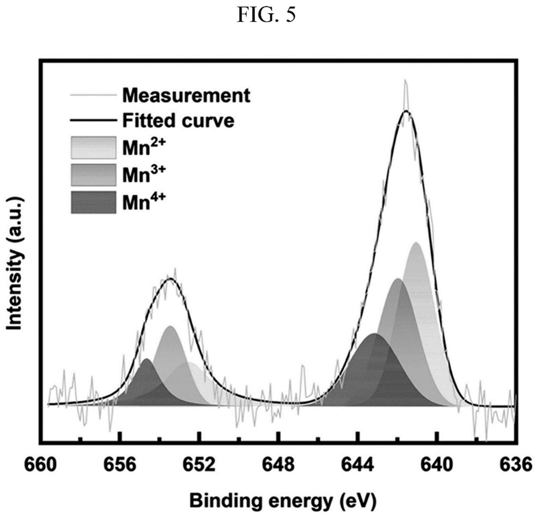

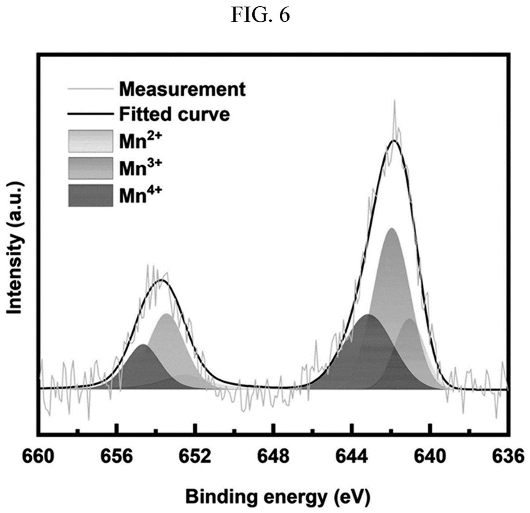

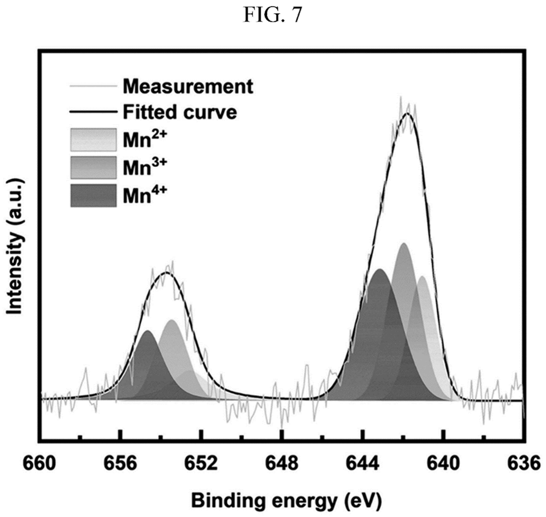

The rechargeable lithium battery cells according to Comparative Example 1 and Examples 1 and 2 were charged to 4.8 V at a constant current of 0.2 C and discharged to 1.5 V at the same current at 25 °C by using a WBCS 3000 equipment. Each of the discharged battery cells was disassembled to take the positive electrode alone, and then, XPS was measured with respect to an area of 400 $\mu$m $\times$ 400 $\mu$m of the positive electrode area for 50 ms at pass energy of 50 Ev and a step interval of 0.1 Ev per step, and 50 ms per step by using an NEXSA (Thermo Fisher Scientific) equipment, and the results are shown in FIGS. 5 to 7. Referring to the results of FIGS. 5 to 7, each area corresponding to $Mn^{2+}$, $Mn^{3+}$, and $Mn^{4+}$ was measured as oxidation number ratios of Mn, from which an average of the oxidation numbers was calculated as an average oxidation number of Mn, which is shown in Table 1. Herein, the average oxidation number of Mn was obtained as $Mn^e$ defined according to Equation 2.

Equation 2

$$Mn^e = [(2 \times R_2)+(3 \times R_3)+(4 \times R_4)]/(R_2+R_3+R_4)$$

In Equation 2, $Mn^e$ represents the average oxidation number of Mn, $R_2$ represents an at% ratio of Mn having the oxidation number of +2, $R_3$ represents an at% ratio of Mn having the oxidation number of +3, and $R_4$ represents an at% ratio of Mn having the oxidation number of +4.

Table 1

|  | Average oxidation number of Mn | Oxidation number ratio of Mn (at%) | | |
|---|---|---|---|---|
|  |  | $Mn^{2+}$ | $Mn^{3+}$ | $Mn^{4+}$ |
| Comparative Example 1 | +2.84 | 40.8 | 34.6 | 24.6 |
| Example 1 | +3.13 | 18.2 | 50.3 | 31.5 |
| Example 2 | +3.16 | 24.0 | 35.9 | 40.1 |

Referring to Table 1, Examples 1 and 2 were confirmed that Mn having the oxidation number of +2 had a ratio of less than or equal to about 25 at% of the total Mn.
On the other hand, Comparative Example 1 was confirmed that Mn having the oxidation number of +2 had a ratio of greater than 25 at% of the total Mn.

**Evaluation Example 2: XRD Evaluation**

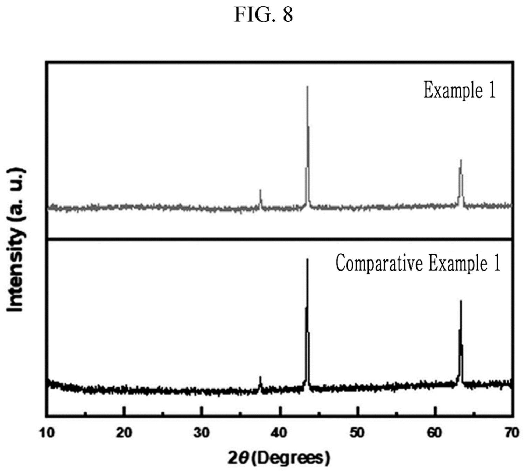

The positive electrode active materials according to Comparative Example 1 and Example 1 were measured with respect to XRD within a 2θ range of 10° to 70° by using a Bruker D6 Phaser device at an X-ray wavelength of 1.54 Å with each voltage/current of 40 Kv/20 Ma, and the results are shown in FIG. 8.
Referring to FIG. 8, the positive electrode active materials according to Comparative Example 1 and Example 1 were confirmed to exhibit three peaks around $2\theta = 35°$ to $40°$, $2\theta = 41°$ to $45°$, and $2\theta = 60°$ to $65°$.

The XRD measurement results confirmed that the positive electrode active materials of Comparative Example 1 and Example 1 had a disordered rocksalt structure.

**Evaluation Example 3: Evaluation of Difference Between Maximum and Minimum Values of Volume of Octahedron in Crystal Structure**

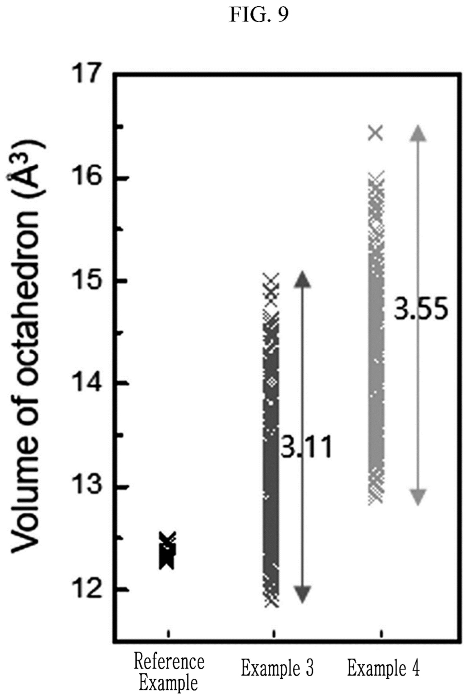

$LiCoO_2$ as a reference example and the positive electrode active materials of Examples 3 and 4 were measured with respect to an electron structure and mechanical and thermodynamic characteristics by using density functional theory based on first-principle calculations as a theoretical framework. A VASP software and a supercomputer capable of massive parallel processing were used to determine initial structures of the positive electrode active materials. After setting an energy convergence criterion to $10^{-6}$ Ev, simulations were repeated until an energy change of the electronic structure calculation converged to less than $10^{-6}$ Ev, and after setting a force convergence criterion to $10^{-2}$ Ev/Å, structural optimization simulations were performed until a force acting on each atom was reduced to $10^{-2}$ Ev/Å or less. Subsequently, a volume of an octahedron formed by lithium and nearest oxygens in a crystal structure optimized through the simulations was measured to calculate a difference between maximum and minimum volumes, and the results are shown in FIG. 9.

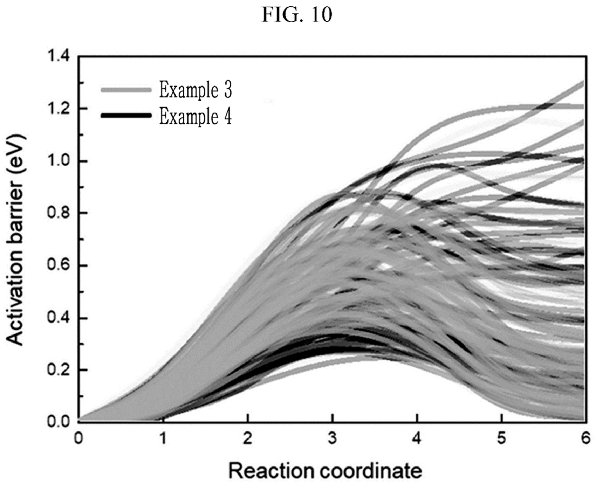

In one or more embodiments, the positive electrode active materials according to Examples 3 and 4, which were evaluated in FIG. 9, were subjected to elastic band simulation calculation to measure a reaction path and an activation barrier. Through the elastic band simulation calculation, a minimum energy path between initial state and final state was determined, and this straight line path was used to interpolate the intermediate phases between the initial state and final state were generated by interpolating along a straight path. After setting a spring constant, which determines strength of an elastic band, to a standard value of -5, simulations were repeated, until a force acting on five intermediate phases converged, to measure the activation barrier, and the results are shown in FIG. 10.

Referring to FIG. 9, the positive electrode active materials of Examples 3 and 4 were confirmed that the difference between the maximum and minimum values of the volume of the octahedron formed by lithium and the nearest oxygen within the crystal structure was less than or equal to 3.6 $Å^3$.

Referring to FIG. 10, when examining the difference between activation barrier maximum and minimum values in each case of measuring the volume values of FIG. 9, Example 4 exhibited a larger difference than Example 3. Accordingly, the smaller difference between the maximum and minimum volumes of the octahedron formed by lithium and the nearest oxygen within the crystal structure, the smaller activation barrier, through which it was confirmed that energy required or desired for lithium ions to diffuse was also reduced, improving or enhancing ionic conductivity characteristics. This was presumed to be because Zr of the $Li_{1.2}Mn_{0.4}Zr_{0.4}O_2$ of Example 4 had a larger ion size than Ti of the $Li_{1.2}Mn_{0.4}Ti_{0.4}O_2$ of Example 3.

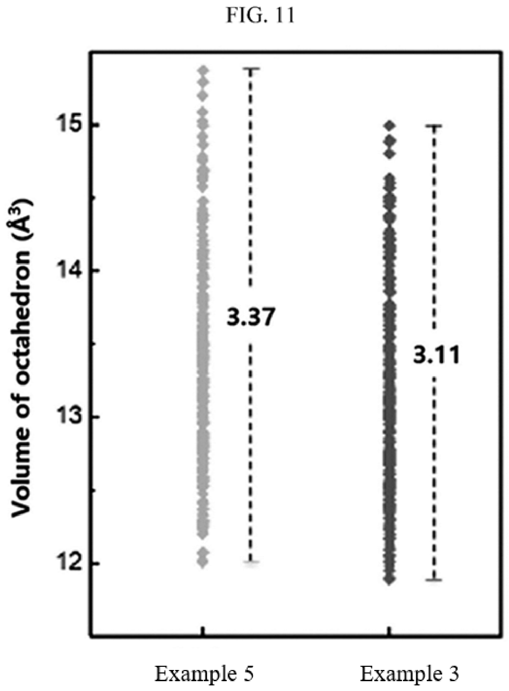

In one or more embodiments, the positive electrode active materials of Example 3 and Example 5 were measured with respect to a volume of octahedron formed by lithium and nearest oxygen in the crystal structure and a difference between maximum and minimum volumes, and the results are shown in FIG. 11.

Referring to FIG. 11, although the positive electrode active materials of Example 5 and Example 3 were lithium manganese titanium oxide (LMTO) where $M^1$ corresponded to Mn, the positive electrode active material of Example 5 exhibited that the difference between the maximum and minimum volumes of the octahedron formed by lithium and the nearest oxygen within the crystal structure was greater than 3.36 $Å^3$, but the positive electrode active material of Example 3 exhibited that the difference between the maximum and minimum volumes of the octahedron formed by lithium and the nearest oxygen within the crystal structure was 3.36 $Å^3$ or less.

Accordingly, in Example 3, the activation barrier was smaller than in Example 5, and, also, the energy required or desired for lithium ions to diffuse was reduced, from which Example 3 was inferred to exhibit improved or enhanced ionic conductivity characteristics.

**Evaluation Example 4: Evaluation of Charge and Discharge Performance**

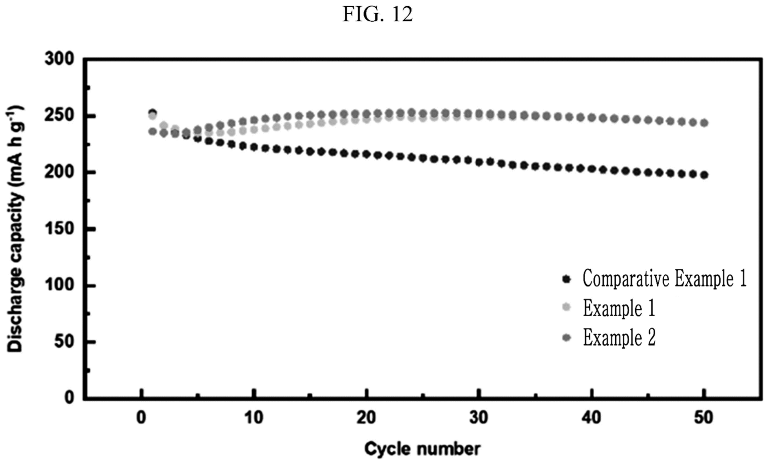

The rechargeable lithium battery cells of Comparative Example 1 and Examples 1 and 2 were 50 cycles repeatedly charged to 4.8 V at a constant current of 0.2 C and then, discharged to 1.5 V at 0.2 C at 25 °C. FIG. 12 shows discharge capacity changes according to the cycles, and Table 2 shows initial discharge capacity and a capacity retention rate, which is a ratio of $50^{th}$ cycle discharge capacity to the initial discharge capacity.

Table 2

| | Initial discharge capacity (mAh/g) | Capacity retention rate (%) |
|---|---|---|
| Comparative Example 1 | 253.0 | 78.2 |
| Example 1 | 250.1 | 97.5 |

(continued)

| | Initial discharge capacity (mAh/g) | Capacity retention rate (%) |
|---|---|---|
| Example 2 | 236.3 | 103.3 |

Referring to FIG. 12 and Table 2, Examples 1 and 2, compared with Comparative Example 1, exhibited a high capacity retention rate and thus excellent or suitable cycle-life characteristics. Comparing Example 1 with Comparative Example 1, even though transition metals were oxidized and reduced in substantially the same amount, capacity degradation was more suppressed in Example 1 than in Comparative Example 1, which was judged that the reduction reaction to $Mn^{2+}$ was alleviated, thereby reducing elution phenomenon.

For example, Example 1 satisfying Equation 1, compared with Example 2 not satisfying Equation 1, was confirmed to exhibit an excellent or suitable capacity retention rate as well as sufficiently or suitably high discharge capacity of greater than or equal to 250 mAh/g and thus all excellent or suitable capacity characteristics and cycle-life characteristics.

While the subject matter of the present disclosure has been described in connection with what is presently considered to be practical example embodiments, it is to be understood that the present disclosure is not limited to the disclosed embodiments. On the contrary, it is intended to cover one or more suitable modifications and equivalent arrangements included within the scope of the appended claims and equivalents thereof. It therefore will be understood that one or more embodiments described herein are just illustrative but not limitative in all aspects.

**Reference Numerals**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

**Claims**

1. A positive electrode active material, comprising a compound represented by Chemical Formula 1:

$$\text{Chemical Formula 1} \qquad A_xM^1_{2-x-y}M^2_yO_{2-a}X_a,$$

   wherein a ratio of $M^1$ having an oxidation number of +2 is less than or equal to 25 at%, based on a total of 100 at% of $M^1$: and
   wherein, in Chemical Formula 1, A is one or more elements selected from Li and Na, $M^1$ is one or more elements selected from among Mn, Fe, Co, Ni, Cr, and V, $M^2$ is one or more elements selected from among Ti, Zr, Nb, Mo, Ta, and W, X is a halogen element, $x/(2-x)>1.1$, $0<y<1$, and $0 \leq a \leq 0.5$.

2. The positive electrode active material as claimed in claim 1, wherein:
   a ratio of $M^1$ having an oxidation number of +3 is greater than or equal to 35 at%, based on the total of 100 at% of $M^1$.

3. The positive electrode active material as claimed in claim 1 or claim 2, wherein:
   a ratio of $M^1$ having an oxidation number of +4 is greater than or equal to 25 at%, based on the total of 100 at% of $M^1$.

4. The positive electrode active material as claimed in any one of claims 1 to 3, wherein:

   (i) an average oxidation number of $M^1$ in Chemical Formula 1 is greater than or equal to +3; and/or
   (ii) an oxidation number of $M^1$ is one or more selected from among +2, +3, and +4.

5. The positive electrode active material as claimed in any one of claims 1 to 4, wherein:

(i) $M^1$ is one or more elements selected from among Mn, Co, and Ni; and/or
(ii) $M^2$ is one or more elements selected from among Ti and Zr.

6. The positive electrode active material as claimed in any one of claims 1 to 5, wherein:
a difference between a maximum value and a minimum value of a volume of an octahedron formed by lithium and the nearest oxygen within the crystal structure is less than or equal to 3.6 $Å^3$.

7. The positive electrode active material as claimed in any one of claims 1 to 6, wherein:

the positive electrode active material satisfies Equation 1:

## Equation 1

$$0.35 \leq R_1/(R_2 + R_3) \leq 0.65,$$

wherein, in Equation 1, $R_1$ represents a ratio of $M^1$ having an oxidation number of +4 based on the total of 100 at% of $M^1$, $R_2$ represents the ratio of $M^1$ having an oxidation number of +2 based on the total of 100 at% of $M^1$, and $R_3$ represents a ratio of $M^1$ having an oxidation number of +3 based on the total of 100 at% of $M^1$.

8. The positive electrode active material as claimed in any one of claims 1 to 7, wherein:
the positive electrode active material has a disordered rocksalt structure.

9. A positive electrode active material, comprising:

a lithium manganese-based composite oxide,
wherein a ratio of manganese having an oxidation number of +2 is less than or equal to 25 at%, based on a total of 100 at% of manganese, optionally wherein:
the positive electrode active material has a disordered rocksalt structure.

10. A method for preparing a positive electrode active material, comprising:

obtaining a mixture of an A-containing carbonate, an $M^1$-containing oxide, and an $M^2$-containing oxide in an alcoholic solvent,
heat-treating the mixture at a temperature in a range of 900 °C to 1500 °C under an inert gas atmosphere,
wherein A is one or more elements selected from Li and Na, $M^1$ is one or more elements selected from among Mn, Fe, Co, Ni, Cr, and V, $M^2$ is one or more elements selected from among Ti, Zr, Nb, Mo, Ta, and W, and
the $M^1$-containing oxide comprises $M^1_2O_3$ and $M^1O_2$.

11. The method as claimed in claim 10, wherein:
the mixture further comprises an A-containing halide.

12. The method as claimed in claim 10 or claim 11, wherein:
the obtaining of the mixture is performed by a wet process using ball milling.

13. The method as claimed in any one of claims 10 to 12, wherein:

(i) the method further comprises, after the obtaining of the mixture, a drying process, wherein the drying process is performed at a temperature in a range of 50 °C to 200 °C; and/or
(ii) the heat-treating of the mixture is performed at a heating rate in a range of 1 °C/min to 10 °C/min, and then within the heat treatment temperature range.

14. A positive electrode, comprising:

a positive electrode current collector; and
a positive electrode active material layer provided on the positive electrode current collector and comprising the positive electrode active material as claimed in any one of claims 1 to 9, optionally wherein:
an electrode plate density of the positive electrode is greater than or equal to 1.8 g/cc.

**15.** A rechargeable battery, comprising:

the positive electrode as claimed in claim 14;
a negative electrode; and
an electrolyte.

# FIG. 1

FIG. 2
100

EP 4 725 908 A1

FIG. 3

FIG. 4

FIG. 5

FIG. 6

FIG. 7

FIG. 8

FIG. 9

FIG. 10

FIG. 11

FIG. 12

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/244104 A1 (NATSUI RYUICHI [JP] ET AL) 24 August 2017 (2017-08-24) <br> * Comparative Example 2; claims * <br> ----- | 1-15 | INV. <br> C01G45/1228 <br> H01M4/505 |
| X | WO 2023/118804 A1 (DYSON TECHNOLOGY LTD [GB]) 29 June 2023 (2023-06-29) | 1-9,14, 15 | |
| A | * examples * <br> ----- | 10-13 | |
| X | EP 4 098 621 A1 (PANASONIC IP MAN CO LTD [JP]) 7 December 2022 (2022-12-07) | 1-9,14, 15 | |
| A | * examples * <br> ----- | 10-13 | |

TECHNICAL FIELDS SEARCHED (IPC)

C01G
H01M

The present search report has been drawn up for all claims

| Place of search | Date of completion of the search | Examiner |
|---|---|---|
| Munich | 4 March 2026 | Marucci, Alessandra |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 25 20 6190

04-03-2026

| Patent document cited in search report | Publication date | Patent family member(s) | Publication date |
|---|---|---|---|
| US 2017244104 A1 | 24-08-2017 | CN 107104232 A | 29-08-2017 |
| | | JP 6876956 B2 | 26-05-2021 |
| | | JP 2017152370 A | 31-08-2017 |
| | | US 2017244104 A1 | 24-08-2017 |
| WO 2023118804 A1 | 29-06-2023 | CN 118414312 A | 30-07-2024 |
| | | EP 4452866 A1 | 30-10-2024 |
| | | GB 2613894 A | 21-06-2023 |
| | | KR 20240125625 A | 19-08-2024 |
| | | US 2025042763 A1 | 06-02-2025 |
| | | WO 2023118804 A1 | 29-06-2023 |
| EP 4098621 A1 | 07-12-2022 | CN 115004412 A | 02-09-2022 |
| | | EP 4098621 A1 | 07-12-2022 |
| | | JP 7634182 B2 | 21-02-2025 |
| | | JP WO2021153527 A1 | 05-08-2021 |
| | | US 2023045802 A1 | 16-02-2023 |
| | | WO 2021153527 A1 | 05-08-2021 |

EPO FORM P0459